(19) **Europäisches Patentamt**
**European Patent Office**
**Office européen des brevets**

(11) **EP 1 810 217 B1**

(12) **EUROPEAN PATENT SPECIFICATION**

(45) Date of publication and mention
of the grant of the patent:
**03.09.2008 Bulletin 2008/36**

(51) Int Cl.:
*G06K 9/00* *(2006.01)*    *G06F 3/00* *(2006.01)*

(21) Application number: **05794750.9**

(22) Date of filing: **19.10.2005**

(86) International application number:
**PCT/GB2005/004029**

(87) International publication number:
**WO 2006/043058 (27.04.2006 Gazette 2006/17)**

(54) **AUTOMATED GESTURE RECOGNITION**

AUTOMATISCHE GESTIK-ERKENNUNG

RECONNAISSANCE DE GESTES AUTOMATISEE

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.10.2004 GB 0423225**

(43) Date of publication of application:
**25.07.2007 Bulletin 2007/30**

(73) Proprietor: **Glasgow School of Art
Glasgow G3 6RQ (GB)**

(72) Inventors:
• **ELGOYHEN, Jocelyn**
  **Glasgow G20 6ND (GB)**
• **PAYNE, John**
  **Helensburgh,**
  **Dumbartonshire G84 8JP (GB)**
• **ANDERSON, Paul**
  **Lochwinnoch Road,**
  **Kilmacolm PA13 4DY (GB)**
• **KEIR, Paul**
  **Glasgow G42 9DN (GB)**
• **KENNY, Tom**
  **Broxburn,**
  **West Lothian EH52 5PB (GB)**

(74) Representative: **Kinsler, Maureen Catherine et al
Marks & Clerk
19 Royal Exchange Square
Glasgow
G1 3AE (GB)**

(56) References cited:
**EP-A- 0 516 862**        **US-A1- 2002 118 880**
**US-A1- 2003 076 293**    **US-A1- 2003 156 756**
**US-A1- 2004 037 463**

• **DAVIS J ET AL: "Recognizing hand gestures" COMPUTER VISION - ECCV'94. THIRD EUROPEAN CONFERENCE ON COMPUTER VISION. PROCEEDINGS. VOL.I SPRINGER-VERLAG BERLIN, GERMANY, 1994, pages 331-340, XP002360860 ISBN: 3-540-57956-7**

**Description**

The present invention relates to computer-based motion tracking systems and particularly, though not exclusively, to a system capable of tracking and identifying gestures or trajectories made by a person.

Recently, there has been considerable interest in developing systems which enable users to interact with computer systems and other devices in ways other than the more conventional input devices, such as keyboards and other text input devices, mice and other pointing devices, touch screens and other graphical user interfaces.

Gesture recognition systems have been identified in the art as being potentially valuable in this regard.

For example, WO 03/001340 describes a gesture recognition system which classifies gestures into one of two possible classes, namely (i) planar translation motion, and (ii) angular motion without translation. This enables separate gesture discriminators to work on the interpretation improving the chances of correct gesture discrimination. WO '340 proposes applying different classes of gestures to different functions, such as reciprocal actions for commands, tilt actions for positional (e.g. cursor) control and planar translational motions for handwriting. US 6681031 describes a gesture-controlled interface which uses recursive 'best fit' type operations attempting to find the best fit between all points on a projection of a sampled gesture to all points on candidate gestures. US 2004/0068409 describes a system for analysing gestures based on signals acquired from muscular activity. US 2004/0037463 describes a system for recognising symbols drawn by pen strokes on a sketch-based user interface by dividing the strokes into a number of sub-frames and deriving a signature for each sub-frame that is expressed as a vector quantity. US 6473690 describes a system for comparing and matching data represented as three-dimensional space curves, e.g. for checking geographic database accuracy. US 2004/0037467 describes a system for determining the presence of an object of interest from a template image in an acquired target image. US 2003/0076293 describes a gesture recognition system in which a gesture is fragmented at crucial points, such as direction changes and transformed to a normalised coordinate system prior to comparison. US 2003/0156756 describes a gesture recognition system in which a trajectory of posture representation vectors are obtained over the duration of a gesture. The gesture is then divided into intervals of approximately equal amounts of body movement.

A significant problem in gesture recognition systems is how to accurately, reliably and speedily detect a gesture or trajectory being made and compare it to a library of candidate gestures stored in a database.

It is an object of the present invention to provide an improved system and method for automatically detecting or tracking gestures, and comparing the tracked gesture with a plurality of possible candidate gestures to identify one or more potential matches.

According to one aspect, the present invention provides a gesture recognition method comprising the steps of:

a) receiving input data related to a succession of positions, velocities, accelerations and/or orientations of at least one object, as a function of time, which input defines a trajectory of the at least one object;
b) performing a vector analysis on the trajectory data to determine a number N of vectors making up the object trajectory, each vector having a length and a direction representing a portion of the trajectory relative to a previous or subsequent vector, the vectors defining a gesture signature;
c) on a vector by vector basis, comparing the object trajectory with a plurality of library gestures stored in a database, each library gesture also being defined by a succession of such vectors; and
d) identifying a library gesture that corresponds with the trajectory of the at least one object.

According to another aspect, the present invention provides a gesture recognition engine comprising:

an input for receiving input data related to a succession of positions, velocities, accelerations and/or orientations of at least one object, as a function of time, which input defines a trajectory of the at least one object;
a gesture analysis process module for performing a vector analysis on the trajectory data to determine a number N of vectors making up the object trajectory, each vector having a length and a direction representing a portion of the trajectory relative to a previous or subsequent vector, the vectors defining a gesture signature; and
a gesture comparator module for comparing, on a vector by vector basis, the object trajectory with a plurality of library gestures stored in a database, each library gesture also being defined by a succession of such vectors and identifying a library gesture that corresponds with the trajectory of the at least one object.

Embodiments of the present invention will now be described by way of example and with reference to the accompanying drawings in which:

Figure 1a is a perspective view of an exemplary motion tracking sensor arrangement;
Figure 1b is a perspective view of an alternative exemplary motion tracking sensor arrangement;
Figure 2 is a schematic diagram of a module for pre-processing accelerometer sensor outputs;

Figure 3 shows illustrations useful in explaining deployment of relative spherical coordinates in gesture definition, in which figure 3 a shows a tracked gesture defined by absolute points in a Cartesian coordinate system and figure 3b shows the tracked gesture defined by points in a relative spherical coordinate system;
Figure 4 is a schematic diagram of a gesture recognition system;
Figure 5 is a flowchart illustrating steps taken by a gesture analysis module during a gesture recognition process;
Figure 6 is a flowchart illustrating steps taken by a gesture comparator module during a gesture matching process; and
Figure 7 is a schematic diagram of a module for pre-processing accelerometer and angular rate sensor outputs.

Throughout the present specification, the expression 'gesture' is used to encompass a trajectory or motion behaviour of an object or of a selected part of an object in space. The object could, for example, be a person's hand, or an object being held in a person's hand. The object could be a person. The object may even be a part of a sensor device itself, e.g. a joystick control as guided by a user's hand.

The trajectory, which encompasses any motion behaviour, generally defines movement of an object or of part of an object relative to a selected stationary reference frame, relative to a moving reference frame, or even relative to another part of the object. A gesture may include a series of positions of the object or part of the object as a function of time, including the possibility that the object does not move over a period of time, which will generally be referred to as a 'posture' or 'stance. For the avoidance of doubt, it is intended that a posture or stance is to be included as a special case of a 'gesture', e.g. a fixed gesture. For convenience, the expression 'object' used herein in connection with defining a gesture is intended to include part of a larger object.

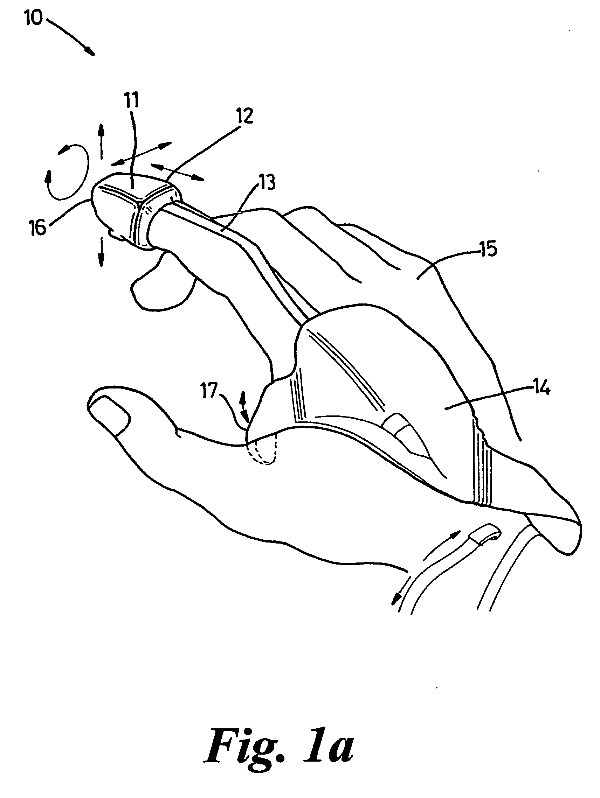

An exemplary embodiment of a sensor arrangement is now described with reference to figure 1a, suitable for obtaining input data relating to the movement of an object. In the arrangement described, a wearable sensor 10 comprising an inertial sensor 11 is housed in a finger cap 12. The inertial sensor 11 is coupled, by wiring 13, to a processor (not shown in the drawing) contained in a strap assembly 14 that may be bound to the user's hand 15. The strap assembly 14 may also include a further inertial sensor (not shown) to provide position data of the user's hand relative to the finger, if desired. The strap assembly 14 preferably includes a telemetry system for streaming output data from the inertial sensor(s) to a computer system to be described. The telemetry system preferably communicates with the computer system over a wireless communication channel, although a wired link is also possible.

The wearable sensor 10 preferably also includes one or more switches for signalling predetermined events by the user. In one example, a touch switch 16 may be incorporated into the finger cap 12 that is actuated by tapping the finger against another object, e.g. the thumb or desk. Alternatively, or in addition, a thumb or finger operated function switch 17 may be located on or near the palm side of the strap assembly 14.

Preferably, the at least one inertial sensor 11 comprises three orthogonal linear accelerometers that determine rate of change of velocity as a function of time in three orthogonal directions as indicated by the straight arrows of figure 1a, together with three angular speed sensors that determine rotation rate about the three orthogonal axes. In combination, these accelerometers and angular speed sensors are capable of providing information relating to the movement of the finger according to the six degrees of freedom.

It will be understood that a number of sensor types and configurations may be used. In general, any sensor type and combination may be used that is capable of generating data relating to a succession of relative or absolute positions, velocities, accelerations and/or orientations of at least one object. A number of different types of such sensor are known in the art.

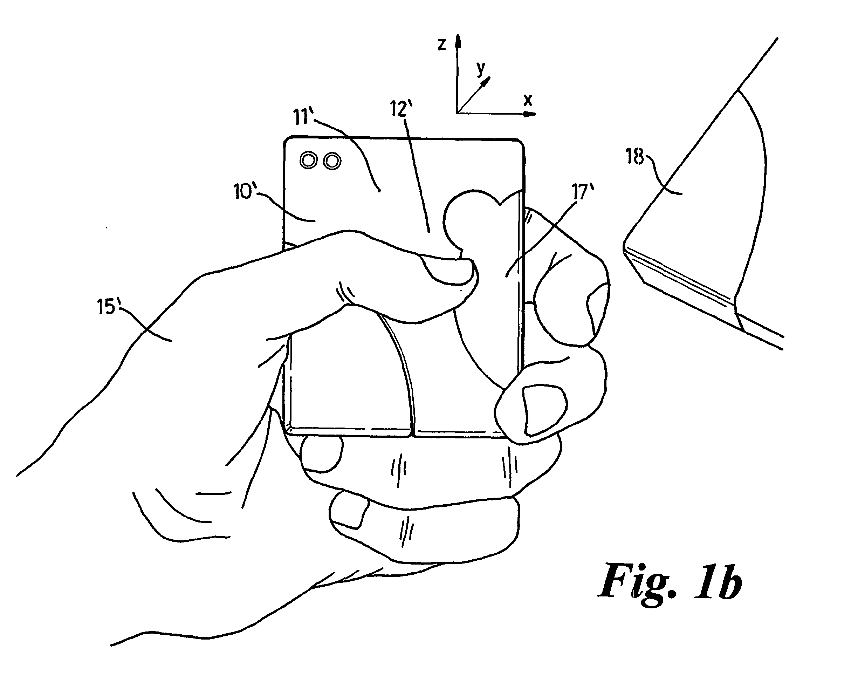

Another example of a sensor arrangement is now described in connection with figure 1b. This sensor arrangement may be described as a handheld sensor 10', rather than a wearable sensor as shown in figure 1a. The sensor 10' comprises an inertial sensor 11' is a housing 12' that may conveniently be held in one hand 15'. The inertial sensor 11' is coupled to a processor (not shown) contained within the housing 12'. A telemetry system communicates with a remote computer system 18 over a wireless communication channel, although a wired link is also possible.

The sensor 10' preferably includes one or more switches 17' for signalling predetermined events by the user. In the example shown, touch switch 17' is incorporated into the housing 12' and is actuated by squeezing or applying pressure to the housing 12'.

Preferably, the at least one inertial sensor 11' comprises three orthogonal linear accelerometers that determine rate of change of velocity as a function of time in three orthogonal directions x, y, z. In combination, these accelerometers are capable of providing information relating to the movement of the object according to the three degrees of freedom. Roll and pitch can be deduced in relation to the earth's gravitational force, hence providing an additional two degrees of freedom for this embodiment.

The embodiment of figures 1a and 1b represents examples where active sensors on or coupled to the moving object are deployed. It is also possible that sensors are alternatively provided remote from the object being tracked.

For example, an object being tracked may include one or more markers identifying predetermined locations on the object that are to be tracked by suitable remote sensors. The markers may be optical, being remotely detectable by an imaging system or photocell arrangement. The markers may be active in the sense of emitting radiation to be detected by suitable passive sensors. The markers may be passive in the sense of reflecting radiation from a remote illumination source, which reflected radiation is then detected by suitable sensors. The radiation may be optical or may lie in another range of the electromagnetic spectrum. Similarly, the radiation may be acoustic.

In other arrangements, the object being tracked need not be provided with specific markers, but rely on inherent features (e.g. shape) of the object that can be identified and tracked by a suitable tracking system. For example, the object may have predetermined profile or profiles that are detectable by an imaging system in a field of view, such that the imaging system can determine the position and/or orientation of the object.

More generally, any tracking system may be used that is capable of generating data relating to a succession of relative or absolute positions, velocities, accelerations and/or orientations of the object. A number of such tracking systems are available to the person skilled in the art.

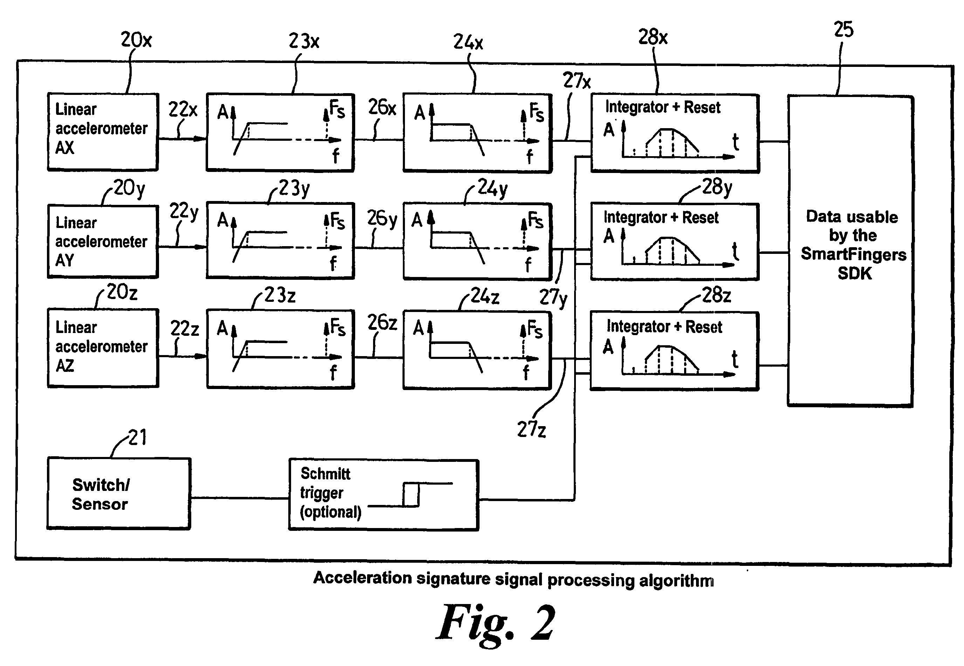

Figure 2 provides an overview of a data collection operation sensing motion of an object and pre-processing the data to obtain an acceleration signature that may be used by the gesture recognition system of the present invention.

In this exemplary implementation, the outputs 22x, 22y, 22z from just three linear accelerometers 20x, 20y and 20z are used. The linear accelerometers are preferably arranged in orthogonal dispositions to provide three axes of movement labelled x, y, and z. Movement of the object on which the accelerometers are positioned will induce acceleration forces on the accelerometers in addition to the earth gravitational field. The raw signals from the three orthogonal linear accelerometers are pre-processed in order to generate a set of data samples that can be used to identify gesture signatures.

The outputs 22x, 22y, 22z of accelerometers 20x, 20y and 20z are preferably digitised using an appropriate A/D converter (not shown), if the outputs 22x, 22y, 22z therefrom are not already in digital form. The digitisation is effected at a sampling frequency and spatial resolution that is sufficient to ensure that the expected gestures can be resolved in time and space. More particularly, the sampling frequency is sufficiently high to enable accurate division of a gesture into a number $N$ of portions or vectors as will be described later.

Preferably, the user marks the start of a gesture by activating a switch 21 (e.g. one of the possible switches 16, 17, 17' of figures 1a and 1b). This switch 21 could generally be in the form of a physical button, a light sensor or a flex sensor. More generally, manual activation of any type of electronic, electromechanical, optoelectronic or other physical switching device may be used.

In another arrangement, the user could mark the start of a gesture by means of another simple gesture, posture or stance that is readily detected by the system. The system may continuously monitor input data for a predetermined pattern or sequence that corresponds to a predetermined trajectory indicative of a 'start gesture' signal. Alternatively, the user could indicate the start of a gesture by any means of marking or referencing to a point in time to begin gesture recognition. For example, the gesture recognition system could itself initiate a signal that indicates to the user that a time capture window has started in which the gesture should be made.

Each of the three output signals 22x, 22y and 22z of the accelerometers 20x, 20y and 20z has a DC offset and a low frequency component comprising the sensor zero-g levels plus the offset generated by the earth's gravitational field, defined by the hand orientation. DC blockers 23x, 23y and 23z relocate the output signals around the zero acceleration mark. The resulting signals 26x, 26y, 26z are passed to low-pass filters 24x, 24y and 24z that smooth the signals for subsequent processing. The outputs 27x, 27y, 27z of filters 24x, 24y, 24z are passed to respective integrators 28x, 28y, 28z which can be started and reset by the switch 21.

The output of this pre-processing stage comprises data 25 representing the trajectory or motional behaviour of the object, preferably in at least two dimensions.

The start and end of the gesture, posture or stance may be indicated by operation of the switch 21.

It will be understood that any or all of the functions of DC blockers 23, low-pass filters 24 and integrators 28 can be carried out in either the analogue domain or the digital domain depending upon the appropriate positioning of an analogue to digital converter. Typically, the accelerometers would provide analogue outputs 22 and the output data 25 would be digitised. Conversion may take place at a suitable point in the data path therebetween.

The gesture recognition system operates on sequences of the two or three-dimensional values or samples gathered from the input devices as described above. The gesture defined by the motion behaviour curve or 'trajectory' of the object may describe a shape that has the same geometric structure as another gesture curve, yet appear unalike due to having a different orientation or position in space. To compensate for this, and to allow detection of gestures independent of these variables, the gesture recognition system preferably first converts the input 'Cartesian' value sequence to one of relative spherical coordinates. This form describes each gesture sequence independently of its macroscopic orientation in space.

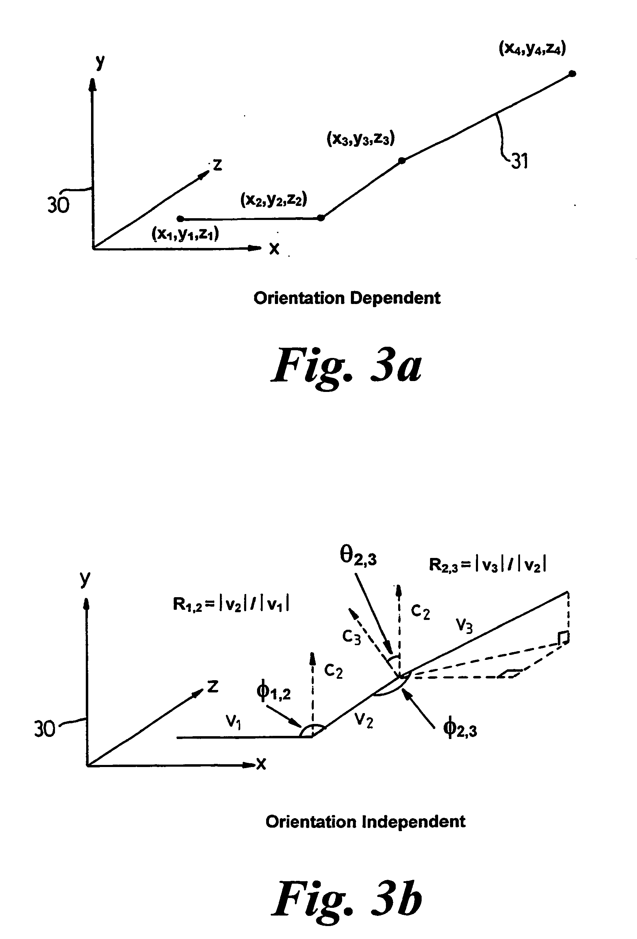

With reference to figure 3a, each three-dimensional value $(x_n, y_n, z_n)$ referenced against Cartesian axes 30 is described by a Cartesian three-tuple. Taken together as a sequence of position values they represent a gesture 31 - the path from $(x_1, y_1, z_1)$ through to $(x_4, y_4, z_4)$. Translation, rotation or scaling of this shape will result in a new and different set of Cartesian values. However, for gesture comparison, it is desirable to make comparison of the input data for a tracked gesture at least partly independent of one or more of translation, rotation and scaling. In other words, it is often important that a gesture is recognised even allowing for variation in the magnitude of the gesture (scaling), variation in position in space that the gesture is made (translation), and even the attitude of the gesture relative to a fixed reference frame (rotation). This is particularly important in recognising, for example, hand gestures made by different persons where there is considerable variation in size, shape, speed, orientation and other parameters between different persons' version of the same gesture and indeed between the same person's repetition of the same gesture.

In figure 3b, the same gesture as figure 3a is now represented by a series of 'relative spherical' three-tuples ($R_{n,n+1}$, $\phi_{n,n+1}$, $\theta_{n,n+1}$), where R is the ratio of vector lengths for $v_{n+1}$ / $v_n$, $\phi$ is the azimuth angle of the (n+1)th vector relative to the nth vector, and $\theta$ is the 'zenith' or 'polar' angle of the (n+1)th vector relative to the plane of the (n-1) and nth vector pair. Note that for the first pair of vectors $v_1$ and $v_2$, only an azimuth $\phi$ angle is required since there is no reference plane. However, for subsequent vector pairs, e.g. $v_2$ and $v_3$ as shown, the azimuth angle $\phi$ represents the angle between the vector pair in the plane defined by the vector pair, while the zenith angle $\theta$ represents the angle of that plane relative to the plane of the preceding vector pair. Thus, in the example shown, zenith angle $\theta_{2,3}$ is the angle that the perpendicular of the $v_2$, $v_3$ plane makes relative to the perpendicular of the $v_1$, $v_2$ plane.

With this representation, translation, rotation and scaling of the shape will not change the critical values of R, $\phi$ and $\theta$. Therefore, the transformed and original versions of a shape or gesture can be compared immediately.

$$v_n = (x_{n+1} - x_n), (y_{n+1} - y_n), (z_{n+1} - z_n)$$

$$c_n = v_n \times v_{n+1}$$

$$\text{sign} = (v_{n+1} \cdot c_n) / | (v_{n+1} \cdot c_n) |$$

$$R_{n,n+1} = | v_{n+1} | / | v_n |$$

$$\phi_{n,n+1} = \cos^{-1} ((v_n \cdot v_{n+1}) / ( | v_n | | v_{n+1} | ))$$

$$\theta_{n,n+1} = (\text{sign})\cos^{-1} ((c_n \cdot c_{n+1}) / ( | c_n | | c_{n+1} | ))$$

The recognition process perceives the data as geometrical, and the data input values handled by the gesture recognition system may be absolute position in space, relative position in space, or any derivatives thereof with respect to time, e.g. velocity or acceleration. The data effectively define a gesture signature either in terms of a path traced in space, a velocity sequence or an acceleration sequence. In this manner, the process of the gesture recognition system can work effectively with many different types of sensor using the same basic algorithm.

Depending on which type of sensor devices are used to collect the data, the gesture recognition system first performs pre-processing steps as discussed above in order to convert the input data into a useful data stream that can be manipulated to derive the values R, $\phi$ and $\theta$ above for any one of position, velocity or acceleration.

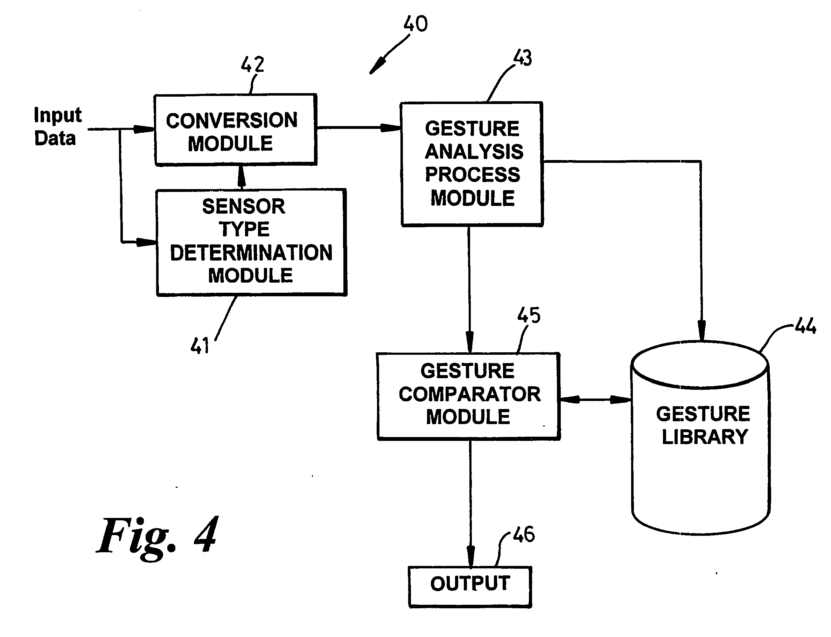

With reference to figure 4, preferably the gesture recognition system 40 includes a module 41 for detecting or determining the nature of the sensors 11 or 20 (figures 1 and 2) from which data is being received. This may be carried out explicitly by exchange of suitable data between the sensors 11 or 20 and the detection module 41. Alternatively, module 41 may be operative to determine sensor type implicitly from the nature of data being received.

The detection module 41 controls a conversion module 42 that converts the input data using the pre-processing steps as discussed above, e.g. identification of start and end points of a gesture, removal of DC offsets, filtering to provide smoothing of the sensor output and analogue to digital conversion.

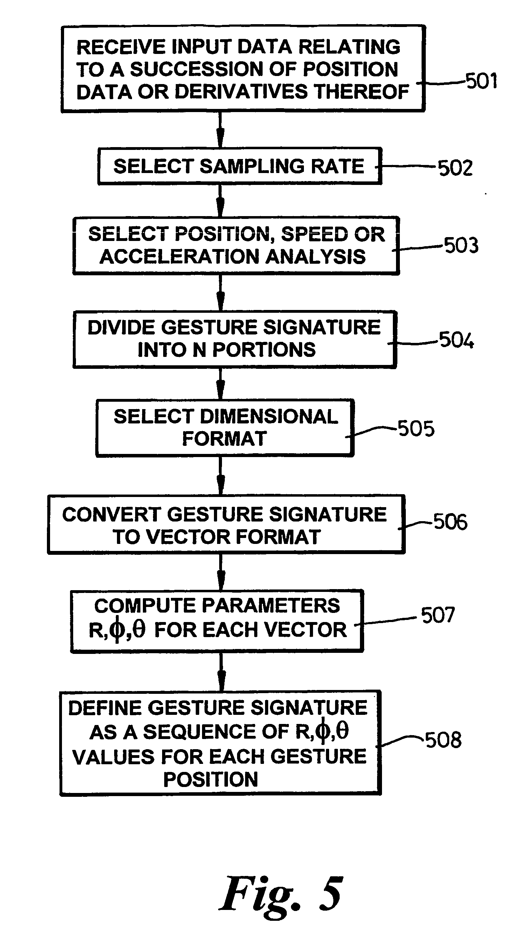

Also with reference to figure 5, a gesture recognition process receives (step 501) the input relating to a succession of positions, velocities or accelerations (or further derivatives) of the object as a function of time that define the gesture signature, or trajectory of the object being sensed.

A gesture analysis process module 43 then performs steps to define the gesture signature in terms of the coordinate system described in connection with figure 3b. Firstly, a sampling rate r is selected (step 502). In a preferred embodiment, a default sampling rate is at least 60 samples per second, and more preferably 100 samples per second or higher. However, this may be varied either by the user, or automatically by the gesture analysis process module 43 according to a sensed length of gesture, speed of movement or sensor type.

The process module 43 then determines (step 503) whether analysis is to be carried out on the basis of position, velocity or acceleration input values, e.g. by reference to the determined sensor type.

The process module 43 then selects a number $N$ of values to resample each gesture signature sequence into, i.e. the gesture signature is divided into $N$ portions (step 504). In a preferred embodiment, the value for $N$ is 10. However, any suitable value may be used depending upon, for example, the length of gesture signature and the number of portions of gesture signatures in a library against which the input gesture signature must be matched. The $N$ portions preferably represent $N$ portions of equal temporal duration. Thus the gesture signature is defined on the basis of $N$ equal time intervals or $N$ equal number of input data sample points.

However, a number of other division criteria are possible to create the $N$ portions. The $N$ portions may be of equal length. The $N$ portions may be of unequal time and length, being divided by reference to points on the trajectory having predetermined criteria such as points corresponding to where the trajectory has a curvature that exceeds a predetermined threshold. In this instance, portions of the trajectory that have a low curvature may be of expended length, while portions of the trajectory that have high curvature may be of short length. Plural curvature thresholds may be used to determine portions of differing lengths.

The process module 43 also determines the dimensional format of the data (step 505), i.e. how many dimensions the input values relate to. This also may affect the selection of candidates in a library of gesture signatures against which the input gesture signature may be potentially matched. For example, two or three dimensional samples may be taken depending upon sensor type, context etc.

The $N$ gesture signature portions are converted into $N$ vectors $v_n$ in the spherical coordinate system (step 506).

The vectors $v_n$ are then normalised for each vector pair, to derive the vectors in the relative spherical coordinate system described in connection with figure 4 (step 507). More specifically, $R_n$, $\phi_n$ and $\theta_n$ are determined where $R_n$ is the ratio of the length of the $n$th vector to the preceding vector; $\phi_n$ is the angle between the $n$th vector and the preceding vector; and $\theta_n$ is the angle between the perpendicular of the plane defined by vectors $\{n, n-1\}$ and the perpendicular of the plane defined by the vectors $\{n-1, n-2\}$.

It will be noted that the first vector will have a length and direction only. In preferred embodiments, the direction of the first vector $v_1$ relative to a reference frame may be ignored if the gesture signature recognition is to be orientation insensitive. Alternatively, the direction of the first vector may be referenced against another frame, e.g. that of the object or other external reference. Alternatively, the direction of any vector in the sequence of N vectors may be used to reference against an external frame if absolute orientation is to be established. Although the first vector is selected for convenience, one or more vectors anywhere in the sequence may be used.

It will also be noted that the second vector will have an R value and a $\phi$ value only, unless the plane of the first vector pair $v_1$ and $v_2$ is to be referenced against an external reference frame.

After this gesture signature analysis process, the gesture signature has been defined as a sequence of R, $\phi$ and $\theta$ values for each of a plurality of portions or segments thereof (step 508).

With further reference to figure 4, gesture recognition system 40 further includes a database or library 44 containing a number of gesture signatures, each gesture signature also being defined as a sequence of R, $\phi$ and $\theta$ values. Preferably, the gesture signatures in the library will each have a type specification indicating a class of gestures to which they belong. The type specification may include a sensor type specification indicating the type of sensor from which the signature was derived, thereby indicating whether the signature specifies position data, velocity data or acceleration data. The type specification may also indicate a spatial dimension of the signature. The type specification may also indicate a size dimension of the signature, i.e. the number of portions (vectors) into which the signature is divided.

Other type specifications may be included, providing a reference indicating how the library gesture signature should be compared to an input gesture or whether the library gesture signature is eligible for comparison with an input gesture.

The gesture library 44 may be populated with gesture signatures using the gesture analysis module 43 when operating in a 'learn' mode. Thus, a user may teach the system a series of gesture signatures to be stored in the library for comparison with later input gesture signatures. Alternatively or in addition, the library 44 may be populated with a collection of predetermined gesture signatures from another source.

The gesture recognition system 40 further includes a gesture comparator module 45 for effecting a comparison of an input gesture signature with a plurality of previously stored library gesture signatures in the database library 44.

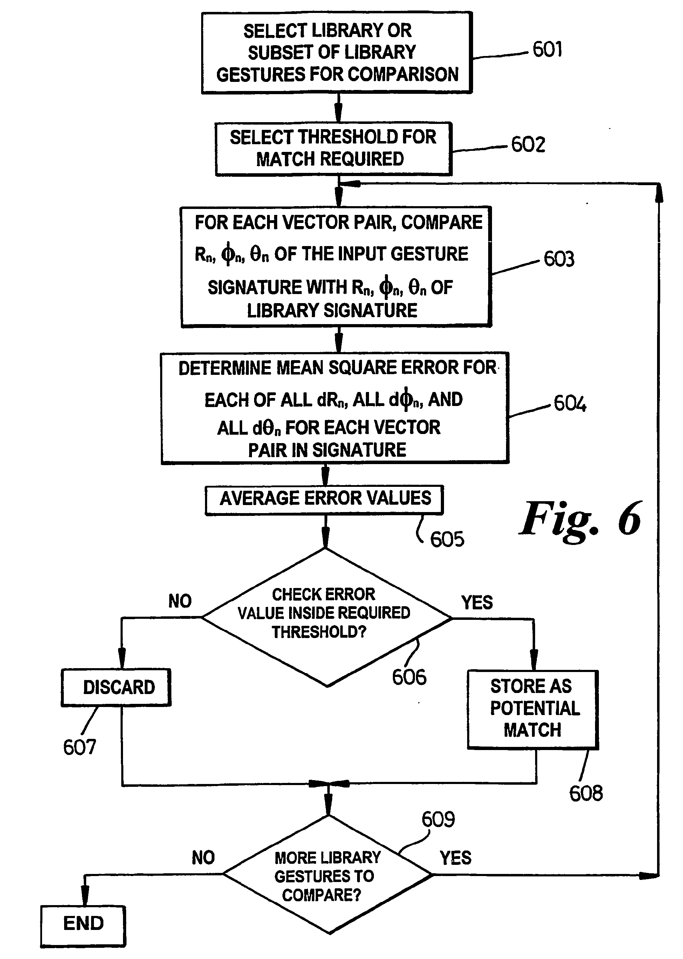

Referring to figure 6, the gesture comparator module 45 performs the following steps.

Firstly, a group or subset of library gesture signatures which are potentially eligible for matching with an input gesture signature is selected (step 601). The group may comprise one library of many libraries; a subset of the library 44; all available library gestures or some other selection. The group may be selected according to the type specification stored with each library gesture signature.

Next, in a preferred embodiment, a threshold for degree of match is determined (step 602). This may be a simple default parameter, e.g. 90%. The default parameter could be overruled by the user according to predetermined preferences. The default parameter could be selected by the system according to the gesture type specification. For example, three dimensional gesture signatures could have a different threshold than two dimensional gesture signatures, and acceleration signatures could have a different threshold than velocity signatures. Further, individual users may be provided with different threshold values to take into account a learned user variability.

The threshold degree of match may be used by the gesture comparator module 45 to determine which library gestures to identify as successful matches against an input gesture signature.

In addition to, or instead of, a threshold degree of match, the gesture comparator module 45 may operate on a 'best match' basis, to determine the library gesture signature that best matches the input gesture signature. The threshold degree of match may then be used to provide a lower level cut-off below which library gestures will not even be regarded as potential matches and thus will not be considered for best match status.

The next step carried out by the gesture comparator module 45 is to compare each of the $N$-1 vector pairs of the input gesture signature with a corresponding vector pair of one of the group of library gestures selected for comparison, and to compute a difference value in respect of the length ratios ($R_n$), azimuth angles ($\phi_n$) and zenith angles ($\theta_n$). These difference values are referred to respectively as $dR_n$, $d\phi_n$ and $d\theta_n$.

Next, for each of the $N$-1 sample pairs, the mean square error for each of the respective difference values for all portions of the signature is calculated, i.e. to find the mean square error for each of $dR_n$, $d\phi_n$ and $d\theta_n$ in the signature comparison (step 604).

These three error averages are then averaged to obtain a single error value for the signature comparison (step 605).

This single error value may then be checked (step 606) to see if it is inside the threshold degree of match selected in step 602. If it is not, it can be discarded (step 607). If it is within the threshold degree of match, then the identity of the library gesture signature compared may be stored in a potential match list (step 608). The gesture comparator module 45 may then check to see if further library gesture signatures for comparison are still available (step 609), and if so, return to step 603 to repeat the comparison process with a new library gesture signature.

After all library gesture signatures for comparison have been checked, the comparator module 45 may select the library gesture signature having the lowest error value from the potential match list.

A number of different strategies for determining matches may be adopted. The comparator module 45 may alternatively present as a 'match' the first library gesture that meets the threshold degree of match criteria. Alternatively, the comparator 45 may output a list of potential matches including all gesture signatures that meet the threshold degree of match criteria. A number of other selection criteria will be apparent to those skilled in the art.

The gesture comparator module 45 then outputs a list of potential matches, or outputs a single best match if the threshold degree of match criteria are met, or outputs a 'no match' signal if no library gestures reach the threshold degree of match criteria. The output module 46 may comprise a display output, a printed output, or a control output for issuing an appropriate command or signal to another computer system or automated device to initiate a predetermined action based on the gesture identified by the match.

In this manner, the gesture recognition system 40 may be incorporated into another system to provide a user interface with that system, such that the system may be controlled at least in part by user gestures.

The embodiments of gesture recognition system 40 so far described perform gesture analysis based on a motion behaviour of a single 'tack', e.g. the motion behaviour of a single point through or in space. It will be recognised that more complex object behaviour may also constitute a gesture signature, e.g. considering the motion behaviour of several points on the object in space, so that the gesture signature effectively comprises more than one 'track'. In another example, it may be desirable also to take into account rotational behaviour of a tracked point, i.e. rotation of the object about its own axes or centre of gravity.

To analyse a gesture using multiple tracks may also be readily performed by the gesture recognition system. For example, the sensor inputs may provide data for two or more tracked points on the object. For convenience, these data may be considered as providing data for a 'compound signature', or signature having two or more tracks. Each of these tracked points may be analysed by the gesture analysis process module 43 in the manner already described. The gesture comparator module 45 may then average together the error values for each of the tracks in order to determine a final error value which can be used for the match criteria.

For rigid objects, multiple tracked points may be inferred from rotation data of the motion behaviour of the object if a sensor system that provided rotation behaviour is used.

Further improvements in gesture signature recognition may be obtained by using signatures comprising two or more of position data, velocity data and acceleration data. In this arrangement, the gesture analysis module 43 may separately determine $R_n$, $\phi_n$ and $\theta_n$ for position as a function of time, for velocity as a function of time and/or for acceleration as a function of time. The gesture comparator module 45 then separately compares positional $R_n$, $\phi_n$ and $\theta_n$, velocity $R_n$, $\phi_n$ and $\theta_n$ and/or acceleration $R_n$, $\phi_n$ and $\theta_n$ of the gesture signature with corresponding values from the gesture library 44 in order to determine match.

It will be noted from the discussion of figures 3b and 5 that the comparison of each of N vectors during gesture matching may be performed in respect of values of R, $\phi$ and $\theta$ for successive vectors, relative to a preceding vector. It is also possible to compare N vectors in respect of $\phi$ and $\theta$ values referenced to a fixed reference frame. For example, for a fixed reference frame having conventional Cartesian x, y and z axes, the values compared may be an azimuth angle $\theta$ of the vector relative to the x axis within the x-y plane, and a zenith angle $\phi$ of the vector relative to the z-axis (steps 507 and 508, figure 5). In other words, the $\phi$ and $\theta$ values of the $n$th vector of the input gesture are compared with the corresponding $\phi$ and $\theta$ values of the $n$th vector of a library gesture, and similarly for all $n$ from l to N. Similarly, the lengths $l$ of the vectors are compared such that the length $l$ of the $n$th vector of the input gesture is compared with the length $l$ of the corresponding $n$th vector of a library gesture, and similarly for all $n$ from 1 to $N$. The comparisons may be on a difference basis or a ratio basis, e.g. $\|l_{n,input}\| / \|l_{n,library}\|$ or $\|l_{n,input}\| - \|l_{n,library}\|$ and $\phi_{n,input} / \phi_{n,library}$ or $\phi_{n,input} - \phi_{n,library}$ and $\theta_{n,input} / \theta_{n,library}$ or $\theta_{n,input} - \theta_{n,library}$.

Thus, comparison step 603 is modified to include a transformation first applied to bring the input gesture signature vector data as close as possible to the current one of the library gestures being compared, the transformation being a combination of one or more of rotation, scale and translation. Then, in a modification to step 604, the root mean square error sum is calculated for all the N transformed input vectors compared to the respective $N$ vectors of the library gesture signature. A zero error value would be a perfect match. The best transformation to apply may be determined according to any suitable method. One such method is that described by Berthold K P Horn in "Closed form solution of absolute orientation using unit quaternions", J. Opt. Soc. of America A, Vol. 4, p. 629 et seq, April 1987. For example, Horn describes that the best translational offset is the difference between the centroid of the coordinates in one system and the rotated and scaled centroid of the coordinates in the other system. The best scale is equal to the ratio of the root-mean-square deviations of the coordinates in the two systems from their respective centroids. These exact results are to be preferred to approximate methods based on measurements of a few selected points. The unit quaternion representing the best rotation is the eigenvector associated with the most positive eigenvalue of a symmetric 4 x 4 matrix. The elements of this matrix are combinations of sums of products of corresponding coordinates of the points.

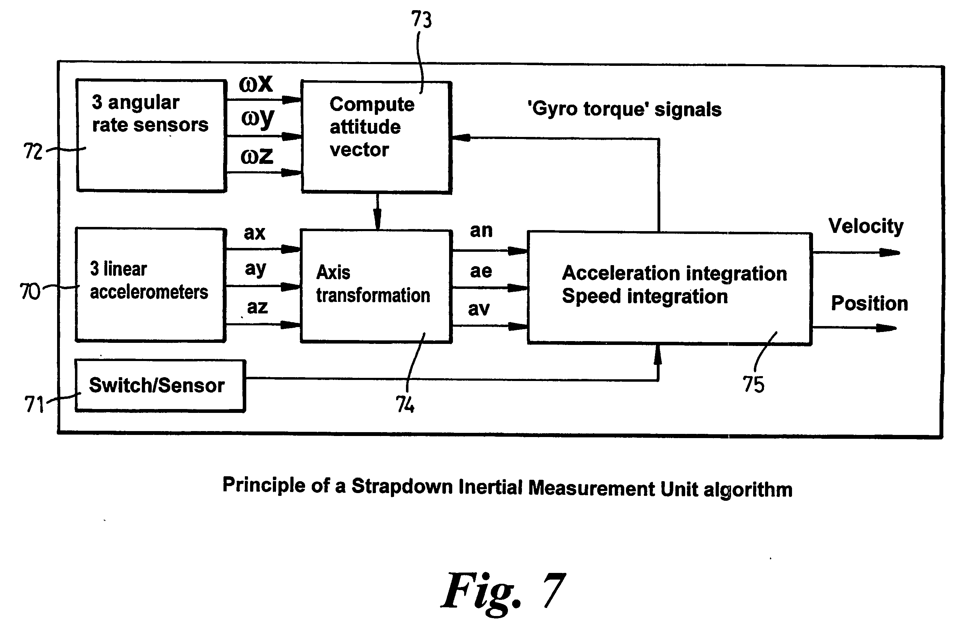

With reference to figure 7, a further sensor arrangement and pre-processing module for providing velocity data input and positional data input is shown. Three orthogonal accelerometers 70 provide acceleration signals $a_x$, $a_y$, $a_z$; and three angular rate sensors 72 provide angular rotation rate signals $\omega_x$, $\omega_y$ and $\omega_z$. A switch or sensor 71 provides a gesture start / stop indication, similar to that described in connection with switch 21 of figure 2.

The angular rate sensor data is passed to an attitude vector processing module 73 which determines a current attitude vector. This is used in conjunction with the three orthogonal acceleration signals $a_x$, $a_y$, $a_z$ to derive motion behaviour information for the six degrees of freedom by axis transformation module 74. This information is then processed by the integrator module 75 to derive velocity signals and position signals relative to a predetermined axis, e.g. the earth's gravitational field. These velocity and position signals may then be used as input to the gesture analysis process module 43.

The gesture recognition system may also be provided with a calibration module. A user may be asked to perform certain specified gestures which are tracked by the sensors and analysed by the gesture analysis process module 43. These gestures are then added to the gesture library 44 for future comparison. Thus, the library gestures may include in their type specification, a user for which these gestures represent a valid subset for comparison.

To assist in calibration and learn modes of the gesture recognition system 40, or for use in virtual reality systems, an output display may be provided to display a rendered image of the user's hand, or other object being tracked. This display may be overlaid with the gesture signature being tracked and/or identified.

Applications for the invention are numerous. Where the gesture recognition engine is incorporated within a device to be tracked, the system may be used to control that object. For example, a handheld device such as a mobile telephone may be adapted to interface with the user by moving the mobile phone itself through predetermined gestures in order to instruct the phone to perform certain commands, e.g. for menu access. Similarly, a joystick may have the gesture recognition engine inbuilt to detect certain patterns of movement which can then be interpreted in a special way. The gesture recognition engine has many applications in computer gaming, e.g. for tracking the head, hand, limb or whole body movement of a game player to implement certain gaming input.

Other embodiments are intentionally within the scope of the accompanying claims.

**Claims**

**1.** A gesture recognition method comprising the steps of:

a) receiving (501) input data related to a succession of positions, velocities, accelerations and/or orientations of at least one object, as a function of time, which input is representative of a trajectory of the at least one object;

b) performing (504 - 508) a vector analysis on the trajectory data to determine a number $N$ of vectors making up the object trajectory, each vector having a length and a direction representing a portion of the trajectory relative to length and direction of a previous or subsequent vector, the vectors defining a gesture signature;

c) on a vector by vector basis, comparing (603) the object trajectory with a plurality of library gestures stored in a database (44), each library gesture also being defined by a succession of such vectors; and

d) identifying (608) a library gesture that corresponds with the trajectory of the at least one object.

2. The method of claim 1 in which step a) further includes determining said received input data from the output of at least one sensor (10, 10', 11, 11', 20, 70, 72) positioned on the object.

3. The method of claim 1 in which step a) further includes determining said received input data from a series of images of the object.

4. The method of claim 1 further including the step of identifying a start and/or end of the received input data sequence by detecting a trigger input from manual activation of any type of electronic, electromechanical, optoelectronic or other physical switching device.

5. The method of claim 1 further including the step of identifying a start and/or end of the received input data sequence by continuously monitoring the input data for a pattern or sequence corresponding to a predetermined trajectory of the object.

6. The method of claim 1 in which step a) is preceded by an operation comprising determining, by a sensor type detection module, a configuration of input device to establish a number and type of input data streams corresponding to one or more of: position data, velocity data, acceleration data, number of translation axes, number of rotation axes, and absolute or relative data type.

7. The method of claim 1 in which the input data (22x, 22y, 22z) is pre-processed to remove DC offsets and/or low frequency components.

8. The method of claim 1 in which the input data (26x, 26y, 26z) is pre-processed by low pass filtering (24x, 24y, 24z) to smooth the input data.

9. The method of claim 1 in which the input data (27x, 27y, 27z) is pre-processed to convert all inputs to data representing velocity of the sensor as a function of time.

10. The method of claim 1 in which the input data is pre-processed to convert it to values relative to one or more reference frames.

11. The method of claim 1 in which the input data is pre-processed to generate a predetermined number of data samples over a gesture time period or gesture trajectory length.

12. The method of claim 1 in which step b) includes determining, for each vector except the first, a direction relative to a preceding vector.

13. The method of claim 1 in which step b) includes determining, for each vector except the first two, a direction relative to a plane defined by the preceding two vectors.

14. The method of claim 1 in which step b) includes determining, for at least one of the vectors, a direction relative to a pre-determined reference frame.

15. The method of claim 1 in which step b) includes determining, for each successive vector pair, a ratio $R$ of respective vector lengths, $l_{n+1} / l_n$; an azimuth angle between the vectors and a zenith angle of the second vector of the pair relative to the plane defined by the preceding two vectors.

16. The method of claim 1 in which step b) includes determining, for the first vector pair, a ratio $R$ of respective vector lengths, $l_2 / l_1$, and an angle between the vectors.

17. The method of claim 15 or claim 16 in which step c) comprises comparing each of the vector pair length ratios $R$ with a corresponding vector pair length ratio of a library gesture.

18. The method of claim 15, claim 16 of claim 17 in which step c) comprises comparing (603) each of the azimuth angles between the vectors with a corresponding angle of a library gesture.

19. The method of claim 18 in which step c) comprises comparing (603) each of the zenith angles with a corresponding angle from the library gesture.

20. The method of claim 1 in which step d) comprises determining (606) the correspondence of the input gesture signature of the at least one object with a library gesture signature when a threshold "degree of match" is reached.

21. The method of claim 1 in which step d) comprises determining (606) the correspondence of the input gesture signature of the at least one object with a library gesture signature according to a "best match" criteria, against some or all of the library gestures in the database.

22. The method of claim 1 in which step d) comprises determining (606) the correspondence of the trajectory of the at least one object with the identified candidate gesture taking into account a learned user variability.

23. The method of claim 1 in which the candidate gesture database (44) includes standard pre-determined gestures and user-defined gestures each defined in terms of a gesture signature.

24. The method of claim 1 further including the step of performing a calibration routine on an input data sequence corresponding to a predetermined candidate gesture in the database.

25. The method of any preceding claim further including the step of rendering an image of a hand based on the received input data.

26. A gesture recognition engine comprising:

   an input for receiving (501) input data related to a succession of positions, velocities, accelerations and/or orientations of at least one object, as a function of time, which input defines a trajectory of the at least one object; a gesture analysis process module (43) for performing (504 - 508) a vector analysis on the trajectory data to determine a number $N$ of vectors making up the object trajectory, each vector having a length and a direction representing a portion of the trajectory relative to length an direction of a previous or subsequent vector, the vectors defining a gesture signature; and a gesture comparator module (45) for comparing (603), on a vector by vector basis, the object trajectory with a plurality of library gestures stored in a database (44), each library gesture also being defined by a succession of such vectors and identifying (608) a library gesture that corresponds with the trajectory of the at least one object.

**Patentansprüche**

1. Gesten-Erkennungsverfahren, die folgenden Schritte umfassend:

   a) Empfangen (501) von Eingangsdaten, die zu einer Abfolge von Positionen, Geschwindigkeiten, Beschleunigungen und/oder Ausrichtungen von mindestens einem Objekt in Beziehung stehen, als eine Funktion der Zeit, wobei der Eingang für eine Bewegungsbahn von dem mindestens einen Objekt repräsentativ ist;
   b) Durchführen (504 - 508) einer Vektoranalyse der Bewegungsbahndaten zur Bestimmung einer Zahl $N$ von Vektoren, die die Objekt-Bewegungsbahn bilden, wobei jeder Vektor eine Länge und eine Richtung hat, die einen Teil der Bewegungsbahn repräsentieren, relativ zu einer Länge und Richtung eines vorherigen oder nachfolgenden Vektors, wobei die Vektoren eine Gestensignatur definieren;
   c) Vergleichen (603) der Objekt-Bewegungsbahn auf einer vektorweisen Basis mit einer Vielzahl von Archivgesten, die in einer Datenbank (44) gespeichert sind, wobei jede Archivgeste auch durch eine Abfolge derartiger Vektoren definiert ist; und
   d) Identifizieren (608) einer Archivgeste, die mit der Bewegungsbahn des mindestens einen Objekts korrespondiert.

**2.** Verfahren nach Anspruch 1, wobei Schritt a) weiter enthält, die empfangenen Eingangsdaten von dem Ausgang von mindestens einem Sensor (10', 10, 11, 11', 20, 70, 72), der an dem Objekt angeordnet ist, zu bestimmen.

**3.** Verfahren nach Anspruch 1, wobei Schritt a) weiter enthält, die empfangenen Eingangsdaten von einer Reihe von Bildern des Objekts zu bestimmen.

**4.** Verfahren nach Anspruch 1, weiter enthaltend den Schritt der Identifizierung eines Beginns und/oder Endes der empfangenen Eingangsdaten-Abfolge durch Detektieren eines Auslösereingangs von manueller Aktivierung einer beliebigen Ausführung einer elektronischen, elektromechanischen, optoelektronischen oder anderen physikalischen Schaltvorrichtung.

**5.** Verfahren nach Anspruch 1, weiter enthaltend den Schritt der Identifizierung eines Beginns und/oder Endes der empfangenen Eingangsdaten-Abfolge durch kontinuierliche Überwachung der Eingangsdaten auf ein Muster oder eine Abfolge, die mit einer vorbestimmten Bewegungsbahn des Objekts korrespondiert.

**6.** Verfahren nach Anspruch 1, wobei Schritt a) eine Operation vorangeht, die Bestimmen einer Konfiguration einer Eingangsvorrichtung durch ein Detektionsmodul in Sensorausführung umfasst, um eine Zahl und Art von Eingangsdatenströmen zu ermitteln, die mit einem oder mehr von Folgendem korrespondieren: Positionsdaten, Geschwindigkeitsdaten, Beschleunigungsdaten, Zahl der Translationsachsen, Zahl der Rotationsachsen und absoluter oder relativer Datentyp.

**7.** Verfahren nach Anspruch 1, wobei die Eingangsdaten (22x, 22y, 22z) vorverarbeitet werden, um Gleichstromversatze und/oder Niederfrequenzkomponenten zu entfernen.

**8.** Verfahren nach Anspruch 1, wobei die Eingangsdaten (26x, 26y, 26z) durch Tiefpassfiltrierung (24x, 24y, 24z) vorverarbeitet werden, um die Eingangsdaten zu glätten.

**9.** Verfahren nach Anspruch 1, wobei die Eingangsdaten (27x, 27y, 27z) vorverarbeitet werden, um alle Eingänge in Daten umzuwandeln, die Geschwindigkeit des Sensors als eine Funktion der Zeit repräsentieren.

**10.** Verfahren nach Anspruch 1, wobei die Eingangsdaten vorverarbeitet werden, um sie in Werte relativ zu einem oder mehr Bezugsrahmen umzuwandeln.

**11.** Verfahren nach Anspruch 1, wobei die Eingangsdaten vorverarbeitet werden, um eine vorbestimmte Zahl von Datenmustern über eine Gesten-Zeitperiode oder Gesten-Bewegungsbahnlänge zu erzeugen.

**12.** Verfahren nach Anspruch 1, wobei Schritt b) weiter enthält, für jeden Vektor außer dem ersten eine Richtung relativ zu einem vorherigen Vektor zu bestimmen.

**13.** Verfahren nach Anspruch 1, wobei Schritt b) weiter enthält, für jeden Vektor außer den ersten beiden eine Richtung relativ zu einer Ebene, die durch die vorherigen zwei Vektoren definiert wird, zu bestimmen.

**14.** Verfahren nach Anspruch 1, wobei Schritt b) enthält, für mindestens einen der Vektoren eine Richtung relativ zu einem vorbestimmten Bezugsrahmen zu bestimmen.

**15.** Verfahren nach Anspruch 1, wobei Schritt b) enthält, für jedes aufeinanderfolgende Vektorpaar ein Verhältnis R von jeweiligen Vektorlängen $l_{n+1}$ / $l_n$, einen Azimutwinkel zwischen den Vektoren und einen Zenitwinkel des zweiten Vektors des Paars relativ zu der Ebene, die durch die vorherigen zwei Vektoren definiert wird, zu bestimmen.

**16.** Verfahren nach Anspruch 1, wobei Schritt b) enthält, für das erste Vektorpaar ein Verhältnis $R$ von jeweiligen Vektorlängen $l_2$ / $l_1$ und einen Winkel zwischen den Vektoren zu bestimmen.

**17.** Verfahren nach Anspruch 15 oder Anspruch 16, wobei Schritt c) umfasst, jedes der Vektorpaar-Längenverhältnisse $R$ mit einem korrespondierenden Vektorpaar-Längenverhältnis einer Archivgeste zu vergleichen.

**18.** Verfahren nach Anspruch 15, Anspruch 16 oder Anspruch 17, wobei Schritt c) Vergleichen (603) jedes der Azimutwinkel zwischen den Vektoren mit einem korrespondierenden Winkel einer Archivgeste umfasst.

**19.** Verfahren nach Anspruch 18, wobei Schritt c) Vergleichen (603) jedes der Zenitwinkel mit einem korrespondierenden Winkel aus der Archivgeste umfasst.

**20.** Verfahren nach Anspruch 1, wobei Schritt d) Bestimmen (606) der Korrespondenz der Eingangsgesten-Signatur des mindestens einen Objekts mit einer Archivgesten-Signatur, wenn ein Schwellenwert "Grad der Übereinstimmung" erreicht wird, umfasst.

**21.** Verfahren nach Anspruch 1, wobei Schritt d) Bestimmen (606) der Korrespondenz der Eingangsgesten-Signatur des mindestens einen Objekts mit einer Archivgesten-Signatur nach einem Kriterium der "besten Übereinstimmung" gegenüber einigen oder sämtlichen der Archivgesten in der Datenbank umfasst.

**22.** Verfahren nach Anspruch 1, wobei Schritt d) Bestimmen (606) der Korrespondenz der Bewegungsbahn des mindestens einen Objekts mit der identifizierten Kandidatengeste unter Berücksichtigung einer gelernten Benutzervariabilität umfasst.

**23.** Verfahren nach Anspruch 1, wobei die Kandidatengesten-Datenbank (44) standardmäßige vorbestimmte Gesten und benutzerdefinierte Gesten enthält, die jeweils in Form einer Gestensignatur definiert sind.

**24.** Verfahren nach Anspruch 1, weiter enthaltend den Schritt der Durchführung einer Kalibrierungsroutine für eine Eingangsdaten-Abfolge, die mit einer vorbestimmten Kandidatengeste in der Datenbank korrespondiert.

**25.** Verfahren nach einem der vorstehenden Ansprüche, weiter enthaltend den Schritt der Wiedergabe eines Bilds einer Hand basierend auf den empfangenen Eingangsdaten.

**26.** Gestenerkennungs-Funktionseinheit, umfassend:

einen Eingang zum Empfangen (501) von Eingangsdaten, die zu einer Abfolge von Positionen, Geschwindigkeiten, Beschleunigungen und/oder Ausrichtungen von mindestens einem Objekt in Beziehung stehen, als eine Funktion der Zeit, wobei der Eingang eine Bewegungsbahn von dem mindestens einen Objekt definiert;

ein Gestenanalyse-Verarbeitungsmodul (43) zum Durchführen (504 - 508) einer Vektoranalyse der Bewegungsbahndaten zur Bestimmung einer Zahl $N$ von Vektoren, die die Objekt-Bewegungsbahn bilden, wobei jeder Vektor eine Länge und eine Richtung hat, die einen Teil der Bewegungsbahn repräsentieren, relativ zu einer Länge und Richtung eines vorherigen oder nachfolgenden Vektors, wobei die Vektoren eine Gestensignatur definieren; und

ein Gesten-Komparatormodul (45) zum Vergleichen (603) der Objekt-Bewegungsbahn auf einer vektorweisen Basis mit einer Vielzahl von Archivgesten, die in einer Datenbank (44) gespeichert sind, wobei jede Archivgeste auch durch eine Abfolge derartiger Vektoren definiert ist, und Identifizieren (608) einer Archivgeste, die mit der Bewegungsbahn des mindestens einen Objekts korrespondiert.

**Revendications**

**1.** Procédé de reconnaissance de geste comportant les étapes consistant à :

a) recevoir (501) des données d'entrée relatives à une succession de positions, de vitesses, d'accélérations et/ou d'orientations d'au moins un objet, en fonction du temps, laquelle entrée est représentative d'une trajectoire dudit au moins un objet ;

b) mettre en oeuvre (504 - 508) une analyse vectorielle sur les données de trajectoire pour déterminer un nombre $N$ de vecteurs constituant la trajectoire de l'objet, chaque vecteur ayant une longueur et une direction représentant une partie de la trajectoire relativement à une longueur et une direction d'un vecteur antérieur ou postérieur, les vecteurs définissant une signature de geste ;

c) sur une base «vecteur par vecteur », comparer (603) la trajectoire de l'objet à une pluralité de gestes de bibliothèque stockée dans une base de données (44), chaque geste de bibliothèque étant également défini par une succession de tels vecteurs ; et

d) identifier (608) un geste de bibliothèque qui correspond à la trajectoire dudit au moins un objet.

**2.** Procédé selon la revendication 1, dans lequel l'étape a) comporte en outre l'étape consistant à déterminer lesdites données d'entrée reçues à partir de la sortie d'au moins un capteur (10, 10', 11, 11', 20, 70, 72) positionné sur l'objet.

**3.** Procédé selon la revendication 1, dans lequel l'étape a) comporte en outre l'étape consistant à déterminer lesdites données d'entrée reçues à partir d'une série d'images de l'objet.

**4.** Procédé selon la revendication 1, comportant en outre l'étape consistant à identifier un début et/ou une fin de la séquence de données d'entrée reçues en détectant une entrée de déclencheur à partir d'une activation manuelle d'un quelconque type de dispositif électronique, électromécanique, optoélectronique ou d'un autre dispositif de commutation physique.

**5.** Procédé selon la revendication 1, comportant en outre l'étape consistant à identifier un début et/ou une fin de la séquence de données d'entrée reçues en exécutant une surveillance continue des données d'entrée pour un motif ou une séquence correspondant à une trajectoire prédéterminée de l'objet.

**6.** Procédé selon la revendication 1, dans lequel l'étape a) est précédée par une opération comportant l'étape consistant à déterminer, au moyen d'un module de détection de type de capteur, une configuration de dispositif d'entrée pour établir un nombre et un type de flux de données d'entrée correspondant à une ou plusieurs des entités suivantes : données de position, données de vitesse, données d'accélération, nombre d'axes de translation, nombre d'axes de rotation, et type de données absolues ou relatives.

**7.** Procédé selon la revendication 1, dans lequel les données d'entrée (22x, 22y, 22z) sont prétraitées afin de supprimer des écarts de courant continu et/ou des composantes de fréquence faible.

**8.** Procédé selon la revendication 1, dans lequel les données d'entrée (26x, 26y, 26z) sont prétraitées au moyen d'un filtrage passe-bas (24x, 24y, 24z) pour lisser les données d'entrée.

**9.** Procédé selon la revendication 1, dans lequel les données d'entrée (27x, 27y, 27z) sont prétraitées pour convertir toutes les entrées en des données représentant la vitesse du capteur en fonction du temps.

**10.** Procédé selon la revendication 1, dans lequel les données d'entrée sont prétraitées pour les convertir en des valeurs relatives à une ou plusieurs trames de référence.

**11.** Procédé selon la revendication 1, dans lequel les données d'entrée sont prétraitées afin de générer un nombre prédéterminé d'échantillons de données sur une période de temps de geste ou sur une longueur de trajectoire de geste.

**12.** Procédé selon la revendication 1, dans lequel l'étape b) comporte l'étape consistant à déterminer, pour chaque vecteur à l'exception du premier, une direction relative à un vecteur précédent.

**13.** Procédé selon la revendication 1, dans lequel l'étape b) comporte l'étape consistant à déterminer, pour chaque vecteur, à l'exception des deux premiers, une direction relative à un plan défini par les deux vecteurs précédents.

**14.** Procédé selon la revendication 1, dans lequel l'étape b) comporte l'étape consistant à déterminer, pour au moins l'un des vecteurs, une direction relative à une trame de référence prédéterminée.

**15.** Procédé selon la revendication 1, dans lequel l'étape b) comporte l'étape consistant à déterminer, pour chaque paire de vecteur successive, un rapport $R$ de longueurs vectorielles respectives, $I_{n+1} / I_n$ ; un angle azimutal entre les vecteurs et un angle de zénith du second vecteur de la paire relative au plan défini par les deux vecteurs.

**16.** Procédé selon la revendication 1, dans lequel l'étape b) comporte l'étape consistant à déterminer, pour la première paire de vecteurs, un rapport $R$ de longueurs vectorielles respectives, $I_2 / I_1$ et un angle entre les vecteurs.

**17.** Procédé selon la revendication 15 ou 16 dans lequel l'étape c) comporte l'étape consistant à comparer chacun des rapportes $R$ de longueur de paire de vecteurs à un rapport de longueur de paire de vecteurs correspondant d'un geste de bibliothèque.

**18.** Procédé selon l'une quelconque des revendications 15, 16 ou 17 dans lequel l'étape c) comporte l'étape consistant à comparer (603) chacun des angles azimutaux entre les vecteurs à un angle correspondant d'un geste de bibliothèque.

**19.** Procédé selon la revendication 18, dans lequel l'étape c) comporte l'étape consistant à comparer (603) chacun des angles de zénith à un angle correspondant du geste de bibliothèque.

**20.** Procédé selon la revendication 1, dans lequel l'étape d) comporte l'étape consistant à déterminer (606) la correspondance entre la signature de geste d'entrée dudit au moins un objet et une signature de geste de bibliothèque lorsqu'un « degré de correspondance » seuil est atteint.

**21.** Procédé selon la revendication 1, dans lequel l'étape d) comporte l'étape consistant à déterminer (606) la correspondance entre la signature de geste d'entrée dudit au moins un objet et une signature de geste de bibliothèque selon des critères de « meilleure correspondance », par rapport à une partie ou à la totalité des gestes de bibliothèque dans la base de données.

**22.** Procédé selon la revendication 1, dans lequel l'étape d) comporte l'étape consistant à déterminer (606) la correspondance entre la trajectoire dudit au moins un objet et le geste candidat identifié en tenant compte d'une variabilité d'utilisateur apprise.

**23.** Procédé selon la revendication 1, dans lequel la base de données de gestes candidats (44) comporte des gestes standards prédéterminés et des gestes définis par l'utilisateur, chacun étant défini en termes d'une signature de geste.

**24.** Procédé selon la revendication 1, comportant en outre l'étape consistant à mettre en oeuvre une routine d'étalonnage sur une séquence de données d'entrée correspondant à un geste candidat prédéterminé dans la base de données.

**25.** Procédé selon l'une quelconque des revendications précédentes comportant en outre l'étape consistant à rendre une image d'une main sur la base des données d'entrée reçues.

**26.** Moteur de reconnaissance de geste comportant:

une entrée pour recevoir (501) des données d'entrée relatives à une succession de positions, de vitesses, d'accélérations et/ou d'orientations d'au moins un objet, en fonction du temps, laquelle entrée définie une trajectoire dudit au moins un objet ;
un module de processus d'analyse de geste (43) pour mettre en oeuvre (504 - 508) une analyse vectorielle sur les données de trajectoire pour déterminer un nombre $N$ de vecteurs constituant la trajectoire de l'objet, chaque vecteur ayant une longueur et une direction représentant une partie de la trajectoire relativement à une longueur et une direction d'un vecteur antérieur ou postérieur, les vecteurs définissant une signature de geste ;
un module comparateur de gestes (45) pour comparer (603), sur une base « vecteur par vecteur », la trajectoire de l'objet à une pluralité de gestes de bibliothèque stockée dans une base de données (44), chaque geste de bibliothèque étant également défini par une succession de tels vecteurs ; et pour identifier (608) un geste de bibliothèque qui correspond à la trajectoire dudit au moins un objet.

14

**Fig. 1a**

Fig. 1b

Fig. 2

Acceleration signature signal processing algorithm

**Orientation Dependent**

*Fig. 3a*

**Orientation Independent**

*Fig. 3b*

*Fig. 4*

RECEIVE INPUT DATA RELATING
TO A SUCCESSION OF POSITION
DATA OR DERIVATIVES THEREOF — 501

SELECT SAMPLING RATE — 502

SELECT POSITION, SPEED OR
ACCELERATION ANALYSIS — 503

DIVIDE GESTURE SIGNATURE
INTO N PORTIONS — 504

SELECT DIMENSIONAL
FORMAT — 505

CONVERT GESTURE SIGNATURE
TO VECTOR FORMAT — 506

COMPUTE PARAMETERS
$R, \phi, \theta$ FOR EACH VECTOR — 507

DEFINE GESTURE SIGNATURE
AS A SEQUENCE OF $R, \phi, \theta$
VALUES FOR EACH GESTURE
POSITION — 508

*Fig. 5*

SELECT LIBRARY OR
SUBSET OF LIBRARY
GESTURES FOR COMPARISON — 601

SELECT THRESHOLD FOR
MATCH REQUIRED — 602

FOR EACH VECTOR PAIR, COMPARE
$R_n$, $\phi_n$, $\theta_n$ OF THE INPUT GESTURE
SIGNATURE WITH $R_n$, $\phi_n$, $\theta_n$ OF
LIBRARY SIGNATURE — 603

DETERMINE MEAN SQUARE ERROR FOR
EACH OF ALL $dR_n$, ALL $d\phi_n$, AND
ALL $d\theta_n$ FOR EACH VECTOR
PAIR IN SIGNATURE — 604

AVERAGE ERROR VALUES
605

*Fig. 6*

NO ← CHECK ERROR
VALUE INSIDE REQUIRED
THRESHOLD? → YES
606

DISCARD
607

STORE AS
POTENTIAL
MATCH
608

609
NO ← MORE LIBRARY
GESTURES TO
COMPARE? → YES

END

Fig. 7

Principle of a Strapdown Inertial Measurement Unit algorithm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03001340 A
- US 6681031 B
- US 20040068409 A
- US 20040037463 A
- US 6473690 B
- US 20040037467 A
- US 20030076293 A
- US 20030156756 A

### Non-patent literature cited in the description

- **BERTHOLD K P HORN.** Closed form solution of absolute orientation using unit quaternions. *J. Opt. Soc. of America A,* April 1987, vol. 4, 629